Europäisches Patentamt

European Patent Office

Office européen des brevets

(19)

(11) Numéro de publication : **0 081 410**
**B1**

# (12) FASCICULE DE BREVET EUROPÉEN

(45) Date de publication du fascicule du brevet :
05.09.84

(51) Int. Cl.³ : **F 28 C   1/02**, F 28 F 25/02

(21) Numéro de dépôt : **82402140.6**

(22) Date de dépôt : **24.11.82**

(54) **Système de distribution d'eau de refroidissement pour aéroréfrigérant.**

(30) Priorité : 09.12.81 FR 8122988

(43) Date de publication de la demande :
**15.06.83 Bulletin 83/24**

(45) Mention de la délivrance du brevet :
**05.09.84 Bulletin 84/36**

(84) Etats contractants désignés :
**BE CH DE IT LI**

(56) Documents cités :
**BE-A-   662 751**
**FR-A-   718 790**
**FR-A- 1 109 187**
**FR-A- 2 119 411**
**FR-A- 2 300 313**
**US-A- 3 318 586**

(73) Titulaire : **CEM COMPAGNIE ELECTRO-MECANIQUE**
**12, rue Portalis**
**F-75008 Paris (FR)**

(72) Inventeur : **Blanquet, Jean-Claude**
**8, rue Florentin Laffon**
**F-78800 Houilles (FR)**

(74) Mandataire : **De Boisse, Louis**
**37, Avenue Franklin D. Roosevelt**
**F-75008 Paris (FR)**

## Description

Dans les centrales thermiques, les tours de refroidissement de l'eau en provenance des condenseurs comportent couramment des aéroréfrigérants atmosphériques du type humide faisant appel à un ruissellement d'eau à l'air libre : une partie de cette eau peut s'évaporer en refroidissant le reste qui demeure à l'état liquide et qu'on recueille dans le bas de la tour en vue de son recyclage, après avoir dûment compensé les pertes par évaporation grâce à un apport d'eau fraîche correspondant.

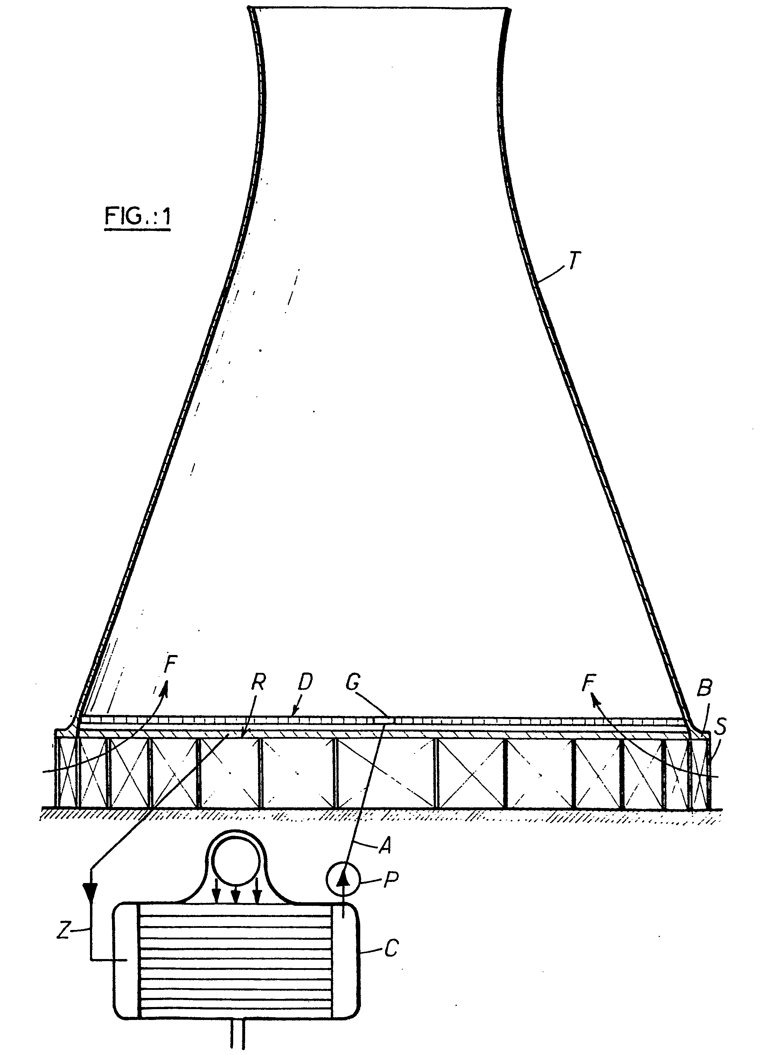

Pour fixer les idées, on a illustré très schématiquement sur la figure 1 des dessins annexés une tour de refroidissement T formée, comme à l'accoutumée, d'un voile de révolution en béton dont la base circulaire B de très grand diamètre repose, à quelques mètres au-dessus du sol, sur la périphérie d'un échafaudage ou charpente de support S donnant libre accès à un courant d'air ascensionnel F mû par tirage naturel ou forcé dans la vaste cheminée que constitue la tour T.

Au pied de celle-ci, en travers de sa base B, s'étend l'aéroréfrigérant dont le composant essentiel est un distributeur d'eau D représenté sous forme d'une galette horizontale de faible épaisseur dont on voit en G une goulotte ou canal duquel partent des ramifications aboutissant à une multiplicité de gicleurs d'aspersion conçus et agencés pour couvrir une zone d'arrosage occupant pratiquement la totalité de la section de base de la tour parcourue par le courant d'air ascendant F. Le débit d'eau qui est fourni à la goulotte F faisant office de collecteur d'alimentation à l'égard des gicleurs d'aspersion et qui peut atteindre des dizaines de milliers de mètres cubes par heure, provient du condenseur C par l'entremise d'une pompe P refoulant dans un conduit d'amenée A. L'eau non évaporée qui tombe est récupérée en R et renvoyée, par une conduite de recyclage Z, au condenseur C.

En règle générale, ce dernier est subdivisé en deux sections ou corps autonomes formant des compartiments séparés dont l'un ou l'autre peut être momentanément condamné, pour des raisons de sécurité et aussi pour permettre à l'installation thermique de continuer à fonctionner — bien qu'à régime réduit — en cas de panne ou d'arrêt délibéré (par exemple pour son entretien) d'une des deux subdivisions du condenseur, l'autre demeurant en service.

Mais, dans un tel cas, le débit d'alimentation du distributeur D se trouve fortement réduit, grosso modo à la moitié du débit mominal, ce qui entraîne des conséquences fâcheuses au niveau de l'aspersion par les gicleurs. En effet, ceux-ci sont de par leur conception même étroitement adaptés à leur régime nominal d'alimentation individuelle qui détermine non seulement la configuration et la dimension de l'aire arrosée par chaque gicleur, mais également sa faculté de briser le flux liquide compact qui lui parvient en un brouillard de gouttes : une chute brutale du régime d'alimentation se traduira par une forte réduction de portée du gicleur, donc par une forte contraction de la zone élémentaire aspergée par celui-ci, et même par la transformation du mode d'arrosage désirable à « pluie » étendue en un mode détestable à « jet » localisé à l'aplomb du gicleur, un peu comme sous une douche dont le robinet serait faiblement entrouvert.

Il en résulte un refroidissement très médiocre de l'eau du condenseur et en définitive l'aéroréfrigérant ne remplit plus son rôle fonctionnel avec toutes les conséquences qui peuvent en découler.

La présente invention permet de s'affranchir des inconvénients qui viennent d'être rappelés et auxquels sont sujets les aéroréfrigérants classiques liés aux condenseurs à double corps.

Comme connu du FR-A-2 300 313, le système de distribution d'eau de refroidissement de l'aéroréfrigérant est, à l'image du condenseur, lui-même subdivisé en deux circuits hydrauliques indépendants ayant chacun sa propre pompe et desservant chacun ses propres gicleurs. Selon la présente invention, en cas de mise hors-service de l'un des deux corps du condenseur et par suite de l'un desdits circuits hydrauliques, les gicleurs appartenant à l'autre circuit qui, lui, demeure en service, sont alimentés pour ce qui les concerne sans répercussion à leur niveau de l'arrêt du premier circuit.

Conformément à un mode de réalisation préféré de la présente invention, les gicleurs consécutifs du distributeur sont alternativement raccordés à l'un et à l'autre des deux circuits hydrauliques pour former ensemble une imbrication de gicleurs des deux types au plan de l'alimentation. Il sera avantageux de déterminer le nombre, la nature et l'espacement des gicleurs de façon que la portée de chaque gicleur se superpose à celle des gicleurs voisins, de sorte qu'en cas d'arrêt de l'un des deux circuits hydrauliques d'alimentation, les gicleurs demeurant alimentés couvrent par eux-mêmes la quasi totalité de la surface disponible de la tour de refroidissement.

La description qui va suivre en regard des dessins annexés, donnée à titre d'exemple non limitatif, fera bien comprendre comment l'invention peut être réalisée.

La figure 1 à laquelle il a été fait référence dans le préambule ci-dessus est une vue schématique en coupe verticale d'une tour de refroidissement, montrant les raccordements de l'aéroréfrigérant au condenseur de l'installation thermique.

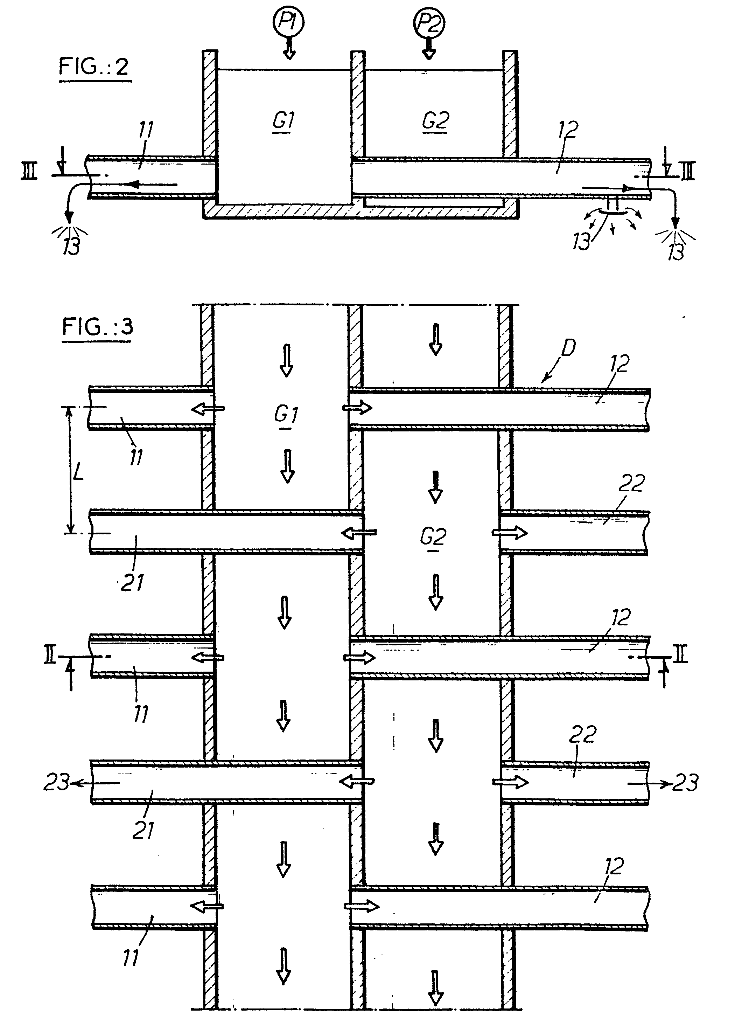

La figure 2 est une vue partielle en coupe verticale selon la ligne II-II de la figure 3, montrant les deux circuits hydrauliques séparés d'alimentation des gicleurs d'aspersion.

La figure 3 en est une vue analogue en coupe horizontale selon la ligne III-III de la figure 2.

L'unique goulotte d'alimentation centrale G du distributeur D de la figure 1, est remplacée, conformément à la présente invention, par deux canaux de répartition contigus G1 et G2 alimentés respectivement, depuis chacun des deux corps du condenseur, par deux pompes indépendantes schématisées en P1 et P2. Le canal G1 forme collecteur d'alimentation pour une série de ramifications successives 11 s'étendant à l'opposé du canal G2 et pour une autre série de ramifications successives 12 traversant ce dernier pour aller au-delà. De même, le canal G2 forme collecteur d'alimentation pour une série de ramifications successives 21 situées entre les ramifications 11 et pour une autre série de ramifications successives 22 situées entre les ramifications 12. On voit donc que le distributeur D est formé d'un réseau de canalisations entrelacées 11 et 21 d'une part, 12 et 22 d'autre part, appartenant alternativement au circuit hydraulique G1 et au circuit hydraulique G2. Toutes ces ramifications desservent les gicleurs d'aspersion dont on a représenté en 13 ceux qui sont alimentés à partir du canal G1 et en 23 ceux qui sont alimentés à partir du canal G2.

En parcourant le distributeur, on trouvera alternativement un gicleur 13 et un gicleur 23, les gicleurs 13 et 23 étant imbriqués les uns par rapport aux autres afin d'éviter de trouver deux gicleurs voisins du même type : 13 ou 23.

Dans la marche à régime nominal, les deux pompes P1, P2 tournent et alimentent chacune un canal de répartition G1, G2, le système étant organisé de manière à réaliser une dispersion régulière du dispositif.

Cependant, dans certains cas, seule une pompe fonctionne et il est impératif de répartir l'eau d'une manière égale sur l'ensemble du réfrigérant. Les trois cas suivants peuvent se présenter ;

1. Pompes P1 et P2 en marche
2. Pompe P1 en marche, pompe P2 arrêtée
3. Pompe P2 en marche, pompe P1 arrêtée.

L'eau est amenée par les deux canaux contigus G1 et G2 sur lesquels sont piquées les conduites qui portent les dispositifs d'aspersion 13, 23.

La répartition de l'eau est alors assurée automatiquement de la manière suivante, selon le cas envisagé plus haut :

1. toutes tuyauteries 11-12, 21-22 alimentées et de même tous les gicleurs 13, 23
2. tuyauteries alimentées : une sur deux (11 mais pas 21 d'une part, 12 mais pas 22 d'autre part)
3. tuyauteries alimentées ; l'inverse (21 mais pas 11 d'une part, 22 mais 12 d'autre part).

Il suffit de munir les tuyauteries de gicleurs 13, 23 ayant un rayon d'aspersion égal ou supérieur à la distance L entre tuyaux, pour assurer une répartition régulière sur toute la surface, quoique de densité moitié de celle obtenue avec les deux pompes P1, P2.

Cette solution élimine toute vanne, seuil, ou autre dispositif mécanique ou hydraulique.

## Revendications

1. Système de distribution d'eau de refroidissement pour aéroréfrigérant associé à un condenseur subdivisé en deux corps autonomes formant des compartiments séparés dont l'un ou l'autre peut être momentanément condamén, ce système de distribution d'eau étant lui-même, à l'image du condenseur, subdivisé en deux circuits hydrauliques indépendants ayant chacun sa propre pompe et desservant chacun ses propres gicleurs, caractérisé en ce que ce système de distribution d'eau est essentiellement constitué d'un bloc intégral se présentant sous forme générale d'une galette horizontale (D) de faible épaisseur et d'un seul tenant, dans laquelle s'imbriquent étroitement lesdits circuits hydrauliques indépendants (G1-11-12 ; G2-21-22) avec leurs groupes de gicleurs respectifs (13 ; 23) de sorte qu'en cas de mise hors-service de l'un des deux corps du condenseur (C) et par suite de l'un desdits circuits hydrauliques, les gicleurs appartenant à l'autre circuit qui, lui, demeure en service, sont alimentés pour ce qui les concerne sans répercussion à leur niveau de l'arrêt du premier circuit.

2. Système de distribution d'eau selon la revendication 1, caractérisé en ce que les gicleurs consécutifs du distributeur sont alternativement raccordés à l'un et à l'autre des deux circuits hydrauliques (G1-11-12 ; G2-21-22) pour former ensemble une imbrication de gicleurs (13 ; 23) des deux types au plan de l'alimentation.

3. Système de distribution d'eau selon la revendication 2, caractérisé en ce que le champ couvert par chaque gicleur recouvre celui des gicleurs voisins, de sorte qu'en cas d'arrêt de l'un des deux circuits hydrauliques d'alimentation (G1-11-12 ou G2-21-22) les gicleurs (13 ou 23) du groupe demeurant alimenté couvrent effectivement par eux-mêmes la quasi totalité de la surface disponible de l'aéroréfrigérant, malgré la défaillance des gicleurs de l'autre groupe.

## Claims

1. Colling water distribution system for an aerorefrigerant associated with a condenser subdivided into two autonomous sections forming separate compartements of which either one can be temporarily blocked up, this water distribution system being itself, likewise to the condenser, subdivided into two independent hydraulic circuits having each its own pump and serving each its own sprayers, characterised in that this water distribution system is basically constituted by an integral block under the general shape of a single-piece small-thickness horizontal slab (D) in which said independent hydraulic circuits (G1-11-12 ; G2-21-22) together with their respective spray units (13 ; 23) closely intertwine whereby, in case of disruption of one of the two sections of the condenser (C) and hence of one of said hydraulic circuits, the sprayers belonging to the other circuit, which itself remains operative, are supplied as far as they are concerned without consequential effects at their level of the breakdown of the former circuit.

2. Water distribution system according to Claim 1, characterised in that the consecutive sprayers of the distributor are alternately connected to one and to the other of the two hydraulic circuits (G1-11-12 ; G2-21-22) to form together an intertwinement of sprayers (13 ; 23) of both types in the supply field.

3. Water distribution system according to Claim 2, characterised in that the range covered by each sprayer overlaps that of the adjacent sprayers, so that, in case of breakdown of one of the two hydraulic feed circuits (G1-11-12 or G2-21-22) the sprayers (13 or 23) of the set remaining supplied effectively cover by themselves almost the whole available area of the aerorefrigerant, notwithstanding the failure of the sprayers of the other set.

**Ansprüche**

1. Verteileranlage für das Kühlwasser eines Kühlturmes mit einem Kondensator, der in zwei autonome Körper mit getrennten Kammern unterteilt ist, von denen die eine oder die andere kurzzeitig berschlossen sein kann, wobei die Verteileranlage selbst entsprechend dem Kondensator in zwei unabhängige Hydraulikkreise unterteilt ist, von denen jedes seine eigene Pumpe besitzt und seine eigenen Sprühdüsen versorgt, dadurch gekennzeichnet, daß die Verteileranlage im wesentlichen aus einem integralen Block besteht, der die Form einer einstückigen, horizontalen Scheibe (D) kleiner Dicke hat, in der die unabhängigen Hydraulikkreise (G1-11-12 ; G2-21-22) mit ihren entsprechenden Gruppen von Sprühdüsen (13 ; 23) eng verschachtelt derart angeordnet sind, daß bei Ausfall eines der Körper des Kondensators (C) und somit eines der Hydraulikkreise die Sprühdüsen, die zu dem weiterarbeitenden anderen Hydraulikkreis gehören, so beaufschlagt werden, daß der Ausfall des ersten Hydraulikkreises ihre Sprühleistung nicht beeinträchtigt.

2. Verteileranlage nach Anspruch 1, dadurch gekennzeichnet, daß die aufeinanderfolgenden Sprühdüsen des Verteilers abwechselnd an dem einen und dem anderen der beiden Hydraulikkreise (G1-11-12 ; G2-21-22) angeschlossen sind, um gemeinsam eine Verschachtelung der Sprühdüsen (13 ; 23) beider Typen der Sprühebene zu bilden.

3. Verteileranlage nach Anspruch 2, dadurch gekennzeichnet, daß das von jeder Sprühdüse abgedeckte Feld das der benachbarten Sprühdüsen überdeckt, derart, daß bei Ausfall eines der beiden Hydraulikkreise (G1-11-12 oder G2-21-22) die Sprühdüsen (13 oder 23) der weiterarbeitenden Gruppe ihrerseits die Gesamtheit der im Kühlturm zur Verfügung stehenden Fläche trotz des Ausfalls der Sprühdüsen der anderen Gruppe abdeckt.

FIG.:1

0 081 410

1

FIG.: 2

FIG.: 3